# EUROPEAN PATENT SPECIFICATION

(11) **EP 1 992 089 B1**
(45) Date of publication and mention of the grant of the patent: **15.03.2017**
(21) Application number: 07715465.6
(22) Date of filing: 02.03.2007
(51) Int. Cl.: H04B 17/00, H04W 24/10, H04W 36/08, H04W 64/00, H04W 88/12, H04W 88/14

(54) **METHOD AND SYSTEM FOR MEASURING QUALITY OF WIRELESS NETWORK**
VERFAHREN UND SYSTEM ZUM MESSEN DER QUALITÄT EINES DRAHTLOSEN NETZWERKS
PROCÉDÉ ET SYSTÈME POUR MESURER LA QUALITÉ D'UN RÉSEAU SANS FIL

(30) Priority: 03.03.2006 KR 20060020474; 03.03.2006 KR 20060020475
(43) Date of publication of application: 19.11.2008
(60) Divisional application: 14152575.8
(73) Proprietor: KTFreetel Co., Ltd., Songpa-gu, Seoul 138-240 (KR)
(72) Inventor: KIM, Shin-Jae, Gyeonggi-do, 411-380 (KR); KIM, Kyung-Yup, Seoul, 137-775 (KR)
(74) Representative: Habermann, Hruschka & Schnabel
(86) International application number: PCT/KR2007/001061
(87) International publication number: WO 2007/100230

(56) References cited:
- WO-A1-03/055250
- WO-A2-98/44748
- KR-A- 20050 034 822
- KR-A- 20050 086 054
- US-A1- 2002 155 831
- US-A1- 2004 185 863
- US-A1- 2005 237 942

## Description

### Technical Field

The present invention relates to a mobile communication system, and in particular, to a method for measuring quality of a wireless network of a mobile communication system and a system therefor, and an apparatus for measuring quality of a wireless network.

### Background Art

An end system for executing a mobile communication service in a mobile communication system (CDMA (code division multiple access) or WCDMA (wideband code division multiple access)) is a base station. The base station maintains a call through continuous signaling with a terminal. For high quality of a mobile communication service, many base stations should be organically designed, and maintain an optimum quality of a wireless network. To maintain an optimum network, service operating providers have made much investment and also should make a continuous investment in the future.

In particular, at an initial time of a communication service, it required much investment to increase the capacity of the wireless network due to a continuous increase of subscribers, but as an increase state of subscribers is in saturation, quality of a mobile communication service is getting more important. For this purpose, the service operating providers make every effort to optimize cluster, for example rearrange base stations or establish relay stations in shadow zones.

A conventional method for measuring quality of a wireless network is used in vehicle routing measurement or in-building quality measurement using an in-building measurement equipment. However, the conventional method for measuring quality of a wireless network is generally performed by manpower, and thus spends huge manpower and materials. And, the conventional method for measuring quality of a wireless network is performed through sampling, and thus, even though much manpower and materials are used, it is impossible to measure quality of the whole cell boundary.

Meanwhile, for continuity of a mobile service, a control signal is continuously transmitted and received between a subscriber terminal and a wireless network. In particular, the subscriber terminal transmits a message to the wireless network for handover between base stations or between sectors in a base station or for report of its service quality state. And, the wireless network performs handover or power control using the message received from the subscriber terminal.

Currently, such a message is utilized only as information for maintaining service continuity between the wireless network and the subscriber terminal. If the message is utilized to measure the whole wireless quality of the wireless network, it is possible to remarkably reduce material resources and measure a wireless quality of the whole cell boundary.
From US 2005/237942 A1 a method for measuring a wireless quality of a wireless network is known, which uses a location service in a mobile communication system composed of a wireless quality analysis server for analyzing the wireless quality, a mobile switching sender and a basis station controller. For measuring the wireless quality the server requests a location service about a specific subscriber terminal to the mobile switching sender, which transmits a location report request of the subscriber terminal to the base station controller, which transmits a wireless quality measurement request to the subscriber terminal based on the location report request, while the base station controller receives a wireless quality measurement report from the subscriber terminal, extracts data for wireless quality measurement from the wireless quality measurement report and transmits the data to the wireless quality analysis server.

### Disclosure

### Technical Problem

The present invention is designed to solve the above-mentioned problems, and therefore it is an object of the present invention to provide a method for measuring and analyzing a wireless quality of a wireless network using a message transmitted and received between the wireless network and a subscriber terminal for handover or service quality maintenance in a mobile communication system, a system therefor, and an apparatus for measuring the wireless quality of the network.

### Technical Solution

In order to achieve the above-mentioned objects, a method for measuring a wireless quality of a wireless network according to claim 1 and a system for measuring a wireless quality of a wireless network in a mobile communication system according to claim 6 is suggested.

### Brief Description of Drawings

FIG. 1 is a block diagram illustrating a network configuration of a system for measuring quality of an asynchronous WCDMA wireless network in accordance with a preferred embodiment of the present invention.
FIG. 2 is a block diagram illustrating a network configuration of a system for measuring quality of a synchronous CDMA wireless network in accordance with a preferred embodiment of the present invention.
FIG. 3 is a flowchart illustrating a method for measuring quality of an asynchronous WCDMA wireless network in accordance with an exemplary embodiment of the present invention.
FIG. 4 is a detailed view illustrating a measurement control and report step of FIG. 3 in accordance with an exemplary embodiment of the present invention.
FIG. 5 is a flowchart illustrating a method for measuring quality of a synchronous CDMA wireless network in accordance with an exemplary embodiment of the present invention.
FIG. 6 is a flowchart illustrating a method for measuring quality of an asynchronous WCDMA wireless network in accordance with another exemplary embodiment of the present invention.
FIG. 7 is a flowchart illustrating a method for measuring quality of a synchronous CDMA wireless network in accordance with another exemplary embodiment of the present invention.
FIG. 8 is a flowchart illustrating a method for measuring quality of an asynchronous WCDMA wireless network in accordance with a further exemplary embodiment of the present invention.
FIG. 9 is a flowchart illustrating a method for measuring quality of a synchronous CDMA wireless network in accordance with a further embodiment of the present invention.
FIG. 10 is a flowchart illustrating a method for measuring quality of an asynchronous WCDMA wireless network in accordance with a still further exemplary embodiment of the present invention.
FIG. 11 is a flowchart illustrating a method for measuring quality of an asynchronous WCDMA wireless network in accordance with a still even further exemplary embodiment of the present invention.
FIG. 12 is a flowchart illustrating a method for measuring quality of a synchronous CDMA wireless network in accordance with a still further exemplary embodiment of the present invention.
FIG. 13a is a view illustrating a handover state of a mobile station.
FIG. 13b is a view illustrating a change of pilot signal strength (Ec/Io) of a mobile station in a state of handover.
FIG. 14 is a view illustrating a handover control step by a event measurement report message in an asynchronous WCDMA network in accordance with an exemplary embodiment of the present invention.
FIG. 15 is a view illustrating a call processing step by a periodic measurement report (PMR) message in an asynchronous WCDMA network in accordance with an exemplary embodiment of the present invention.
FIG. 16 is a view illustrating a handover control step by a pilot strength measurement message (PSMM) in a synchronous CDMA network in accordance with an exemplary embodiment of the present invention.
FIG. 17 is a view illustrating an example of a measurement control (MC) message used in the present invention.
FIG. 18 is a view illustrating an example of a measurement report (MR) message used in the present invention.
FIG. 19 is a view illustrating a wireless quality measurement result message in accordance with an exemplary embodiment of the present invention.
FIG. 20 is a block diagram illustrating a configuration of a wireless quality analysis device of an asynchronous WCDMA wireless network in accordance with an exemplary embodiment of the present invention.
FIG. 21 is a view illustrating an analysis result of receiving sensitivity (CPICH RSCP (Common PIlot CHannel Received Signal Code Power)) of a mobile station using a wireless quality measurement result message in accordance with an exemplary embodiment of the present invention.
FIG. 22 is a view illustrating an analysis result of pilot signal strength (CPICH Ec/ Io (Common PIlot CHannel Energy per Chip over Interference noise)) using a wireless quality measurement result message in accordance with an exemplary embodiment of the present invention.
FIG. 23 is a view illustrating an analysis result of UE Transmitted Power (User Equipment Transmitted Power) using a wireless quality measurement result message in accordance with an exemplary embodiment of the present invention.
FIG. 24 is a view illustrating an analysis result of UE Rx-Tx Time Difference (User Equipment Receiving and Transmitting Time Difference) using a wireless quality measurement result message in accordance with an exemplary embodiment of the present invention.
FIG. 25 is a view illustrating an analysis result of receiving sensitivity (CPICH RSCP) of a mobile station according to RTT (Round Trip Delay) using a wireless quality measurement result message in accordance with an exemplary embodiment of the present invention.
FIG. 26 is a view illustrating an analysis result of a wireless quality in a handover overlapping area using a wireless quality measurement result message in accordance with an exemplary embodiment of the present invention.

### Best Mode for Carrying Out the Invention

Hereinafter, preferred embodiments of the present invention will be described in detail with reference to the accompanying drawings.

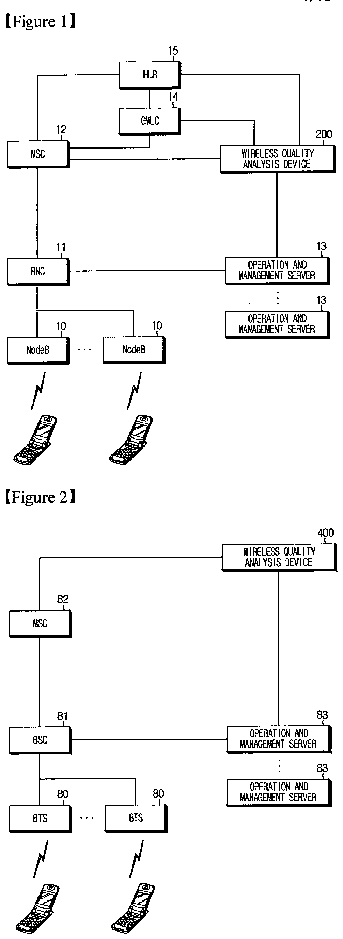

FIG. 1 is a block diagram illustrating a network configuration of a system for measuring quality of an asynchronous WCDMA wireless network in accordance with a preferred embodiment of the present invention.

As shown in FIG. 1, the system for measuring quality of an asynchronous WCDMA wireless network includes a NodeB 10, a radio network controller (RNC) 11, a mobile switching center (MSC) 12, an operation and management (O&M) server 13, a gateway mobile location center (GMLC) 14, a home location register 15 and a wireless quality analysis device 200.

The NodeB 10 executes radio signal transmitting and receiving, radio channel encoding and decoding, baseband signal processing, diversity (space), radio resource management, and self-maintenance functions. The radio network controller 11 executes functions for matching with the base station 10, handover processing between cells, or call controlling, and a single radio network controller 11 controls a plurality of the NodeBs 10.

In particular, the radio network controller 11 receives a location report control message about a mobile station from the mobile switching center 12, or in the case that a mobile station located in a subcell set by the wireless quality analysis device 200 sets up a call, the radio network controller 11 transmits a wireless quality measurement control message to the mobile station and receives a corresponding wireless quality measurement report message. The radio network controller 11 extracts data for wireless quality measurement from the received wireless quality measurement report message and transmits the data to the operation and management server 13.

Preferably, the radio network controller 11 receives information of a subcell to measure a wireless quality (MSC range, RNC range, NodeB range, Sector range or FA range) from the operation and management server 13, and in the case that a call is set up in a corresponding subcell, the radio network controller 11 transmits a wireless quality measurement control message to a mobile station having call setup and receives a response thereto.

The mobile switching center 12 provides an interface function with the radio network controller 11, and provides exchange functions (or interworking functions) between mobile subscribers and between mobile subscribers and subscribers of a fixed network, for example PSTN (Public Switched Telephone Network) or ISDN (Integrated Services Digital Network). In particular, in the case that the mobile switching center 12 receives a location service request about a specific mobile terminal from the wireless quality analysis device 200, the mobile switching center 12 transmits a location report control message for wireless quality measurement to the radio network controller 11. That is, the wireless quality is measured using a location service (LCS) such that the radio network controller 11 receives a location report control message for wireless quality measurement from the mobile switching center 12, and then separately collects data for wireless quality measurement except for general location data, and transmits the data to the operation and management server 13.

The operation and management (O&M) server 13 manages the NodeB 10 and the radio network controller 11, and collects data for wireless quality measurement at the request of the wireless quality analysis device 200, which occurs from the wireless network. Preferably, the operation and management server 13 collects data for wireless quality measurement from the radio network controller 11. And, the operation and management server 13 receives information of a subcell (MSC, RNC, NodeB, sector or FA) to measure the wireless quality from the wireless quality analysis device 200, and transmits corresponding subcell information to the radio network controller 11. In the case that a mobile station located in the subcell sets up a call, the radio network controller 11 transmits a wireless quality measurement control message to a corresponding mobile station and receives a wireless quality measurement report message thereto. The radio network controller 11 extracts data for wireless quality measurement from the received wireless quality measurement report message and transmits the data to the operation and management server 13. If the operation and management server 13 collects all data for wireless quality measurement occurring from the wireless network, overload may occur to the wireless network and the operation and management server 13. Thus, to solve this problem, it may select a range for collecting data for wireless quality measurement. However, the present invention is not limited in this regard.

The gateway mobile location center 14 cooperates with the mobile switching center 12 or SGSN (Serving GPRS (General Packet Radio Service) Supporting Node) for a location-based service, and executes location requesting, collecting, storing and transmitting functions.

The home location register 15 executes functions for registering and deleting location information of a mobile station. And, the home location register 15 stores profile information of a mobile station. The profile information includes identification number and additional service information of a mobile station.

The wireless quality analysis device 200 collects data for wireless quality measurement using the location service (LCS). In this case, the wireless quality analysis device 200 cooperates with the gateway mobile location center 14 and the mobile switching center 12, and makes the radio network controller 11 collect data for wireless quality measurement and transmit the data to the operation and management server 13. And, the wireless quality analysis device 200 requests a plurality of the operation and management servers 13 to collect data for wireless quality measurement. The wireless quality analysis device 200 receives the collected data from the operation and management server 13 and analyzes quality of the whole wireless network. And, the wireless quality analysis device 200 outputs an analysis result through a graphic user interface (GUI).

According to exemplary embodiments, the wireless quality analysis device 200 may be included in the operation and management server 13 or formed separately from the operation and management server 13 as in an exemplary embodiment of FIG. 1. In claims, it should be understood that a wireless quality analysis server includes the wireless quality analysis device 200 and the operation and management server 13 illustrated in FIG. 1. Preferably, the wireless quality analysis device 200 is formed separately from the operation and management server 13, and the wireless quality analysis device 200 periodically requests the operation and management server 13 to collect data for wireless quality measurement and receives all data for wireless quality measurement which is stored in the operation and management server 13, and then analyzes the data and displays the data through a GUI.

FIG. 2 is a block diagram illustrating a network configuration of a synchronous CDMA wireless network quality measuring system in accordance with the present invention.

As shown in FIG. 2, the system for measuring quality of a synchronous CDMA wireless network includes a base transceiver station (BTS) 80, a base station controller (BSC) 81, a mobile switching center (MSC) 82, an operation and management (O&M) server 83, and a wireless quality analysis device 400.

The base transceiver station 80 executes functions for radio signal transmitting and receiving, system synchronizing (GPS), radio channel encoding and decoding, baseband signal processing, diversity (space), radio resource management, and self-maintenance. The base station controller 81 executes functions for matching with the base transceiver station 80, handover processing between cells or call controlling, and a single base station controller 81 controls a plurality of the base transceiver stations 80.

In particular, the base station controller 81 transmits a location registration order message to a mobile station of an idle state by control of the wireless quality analysis device 400, and receives a response thereto. The base station controller 81 extracts data for wireless quality measurement from the response received from the base transceiver station 80 and transmits the data to the operation and management server 83.

And, the base station controller 81 transmits a wireless quality measurement request message to a mobile station of a traffic state (i.e. a call setup state, for example voice call or SMS (Short Messaging Service)) by control of the operation and management server 83, and receives a wireless quality measurement response message thereto once or periodically. The base station controller 81 extracts data for wireless quality measurement from the wireless quality measurement response message, and transmits the data and RTD (Round Trip Delay) information transmitted from the base transceiver station 80 to the operation and management server 83.

Preferably, the base station controller 81 receives information of a subcell (MSC range, BTS range or FA range) to measure a wireless quality from the operation and management server 83, and in the case that a call is set up in a corresponding subcell, the base station controller 81 transmits a wireless quality measurement request message to the mobile station having call setup and receives a response thereto.

The mobile switching center (MSC) 82 provides an interface function with the base station controller 81, and provides exchange functions (or interworking functions) between mobile subscribers and between mobile subscribers and subscribers of a fixed network, for example PSTN or ISDN. In particular, in the case of wireless quality measurement using a mobile station of an idle state, the mobile switching center 82 receives a location registration order about the mobile station of an idle state from the wireless quality analysis device 400, and transmits the location registration order to the base station controller 81 where a corresponding mobile station is located. And, the mobile switching center 82 receives a location registration request from the mobile station through the base station controller 81 and registers the location information in a home location register.

The operation and management (O&M) server 83 manages the base transceiver station 80 and the base station controller 81, and collects data for wireless quality measurement at the request of the wireless quality analysis device 400, which occurs from the wireless network. Preferably, the operation and management server 83 collects data for wireless quality measurement from the base station controller 81. And, the operation and management server 83 receives information of a subcell (MSC, BSC, BTS or FA) to measure a wireless quality from the wireless quality analysis device 400, and transmits corresponding subcell information to the base station controller 81. If the operation and management server 83 collects all data for wireless quality measurement occurring from the wireless network, overload may occur to the wireless network and the operation and management server 83. Thus, to solve this problem, it may select a range for collecting data for wireless quality measurement. However, the present invention is not limited in this regard.

The wireless quality analysis device 400 requests a plurality of the operation and management (O&M) servers 83 to collect data for wireless quality measurement, and analyzes quality of the whole wireless network using the collected data. And, the wireless quality analysis device 400 outputs an analysis result through a graphic user interface (GUI). In the case that the wireless quality analysis device 400 analyzes quality of a wireless network using a mobile station of an idle state, the wireless quality analysis device 400 actives the mobile station of an idle state through the mobile switching center 82, and collects data for wireless quality measurement that is received from the activated mobile station through the operation and management server 83, and analyzes the data. Meanwhile, in the case that the wireless quality analysis device 400 analyzes quality of the wireless network using a mobile station of a traffic state, the wireless quality analysis device 400 collects and analyzes data for wireless quality measurement that is received from the mobile station through the operation and management server 83, and analyzes the data.

According to exemplary embodiments, the wireless quality analysis device 400 may be included in the operation and management server 83 or formed separately from the operation and management server 83 as in an exemplary embodiment of FIG. 2. In claims, it should be understood that the wireless quality analysis server includes the wireless quality analysis device 400 and the operation and management server 83 illustrated in FIG. 2. Preferably, the wireless quality analysis device 400 is formed separately from the operation and management server 83, and the wireless quality analysis device 400 periodically requests and receives all data for wireless quality measurement that is stored in the operation and management server 83, and then analyzes the data and displays the data through a GUI.

Hereinafter, a method for measuring quality of a wireless network in the system for measuring quality of a wireless network according to the present invention is described in detail with reference to drawings.

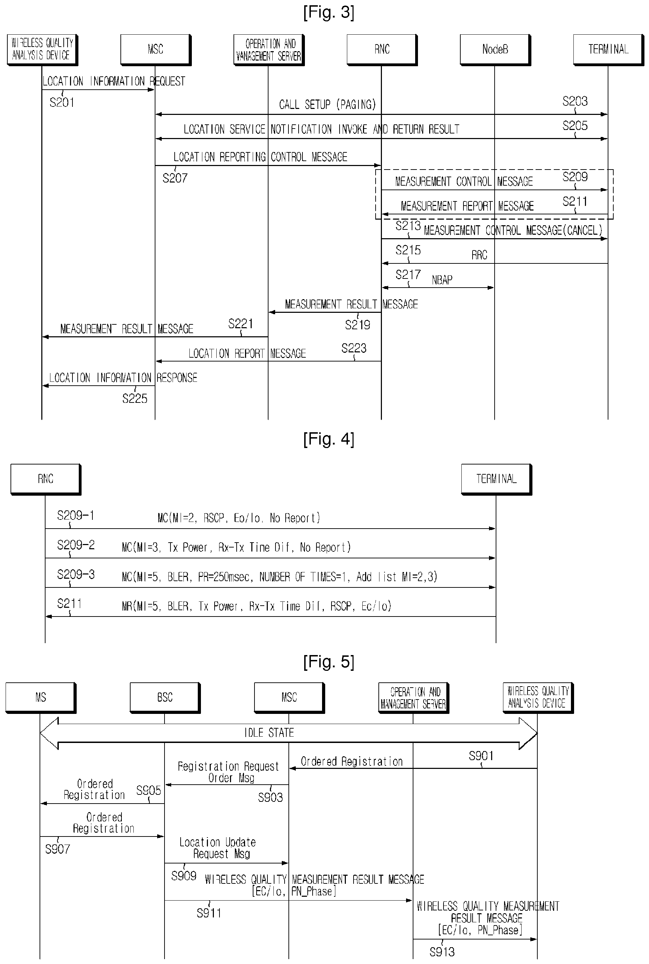

FIG. 3 is a flowchart illustrating a method for measuring quality of an asynchronous WCDMA wireless network in accordance with an exemplary embodiment of the present invention, and shows a method for measuring quality of a wireless network by activating a mobile station of an idle state based on a location service (LCS).

As shown in FIG. 3, to measure quality of a wireless network using a specific mobile station, first, the wireless quality analysis device 200 requests location information about the mobile station to the mobile switching center 12 (S201). At this time, a location information request transmitted to the mobile switching center 12 includes identification information (for example, Client type=PLMN Operator) indicating that a corresponding location information request is for wireless quality measurement. Here, the wireless quality analysis device 200 may request location information using the gateway mobile location center (GMLC) 14. The wireless quality analysis device 200 transmits a location measurement request about a specific mobile station to the gateway mobile location center (GMLC) 14, and then the gateway mobile location center 14 inquires the location of the mobile station to the home location register 15 and receives location information thereto. Then, the gateway mobile location center (GMLC) 14 request location information of the mobile station to the mobile switching center 12.

As such, the mobile switching center 12 receives a location information request about a specific mobile station, and sets up a call with the mobile station via the radio network controller (RNC) and the NodeB (S203). Then, the mobile switching center 12 transmits an LCS location notification invoke message to the mobile station having call setup, and receives an LCS location notification return result thereto (S205).

As described above, the mobile switching center 12 changes a state of the mobile station from an idle state to an active state, and then transmits a location reporting control message to the radio network controller 11 (S207). At this time, the location reporting control message includes identification information (for example, Client type=PLMN Operator) indicating that a corresponding location reporting control message is for wireless quality measurement.

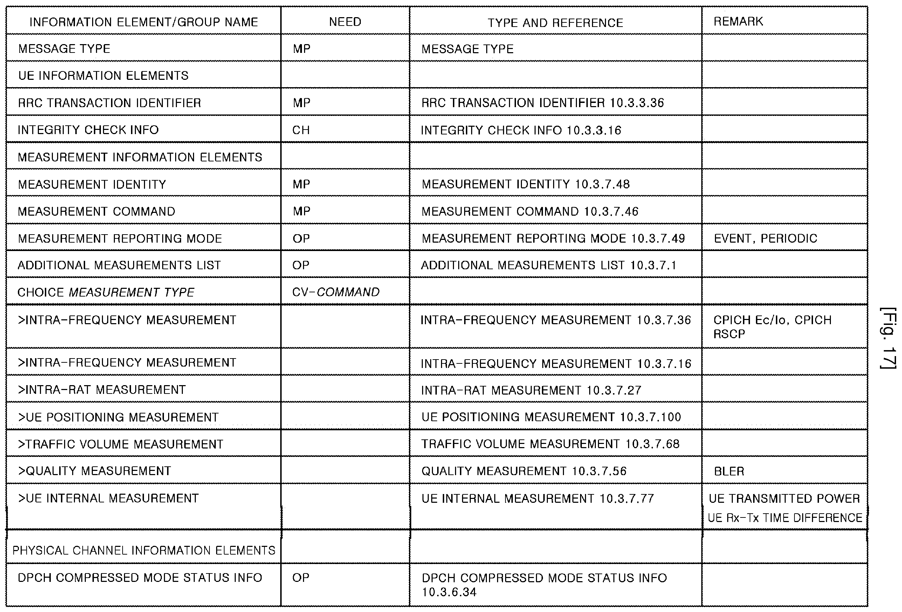

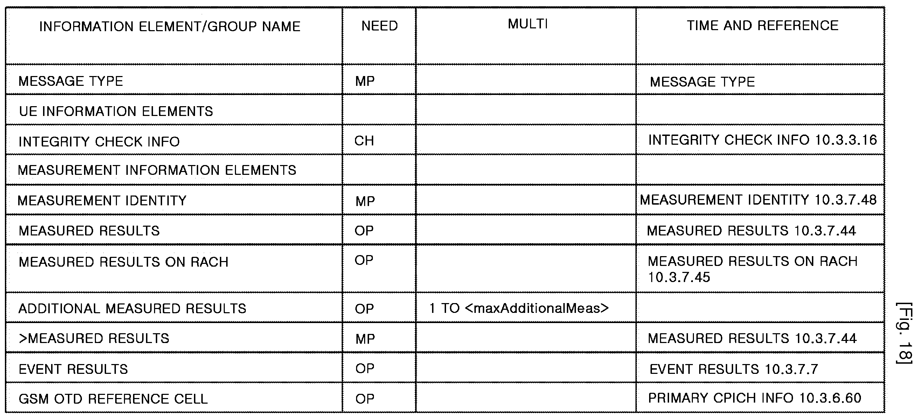

The radio network controller 11 receives the location reporting control message, and then transmits a measurement control (MC) message for wireless quality measurement to the mobile station (S209), and receives a measurement report (MR) message thereto from the mobile station (S211). The measurement report (MR) message received from the mobile station includes CPICH RSCP, CPICH Ec/Io, BLER (BLock Error Rate), UE Tx-power or UE Rx-Tx time difference. The radio network controller 11 receives the measurement report (MR) message, and then transmits a measurement control (MC) message for measurement order release to the mobile station (S213). Here, the measurement control (MC) message is defined in an asynchronous WCDMA RRC (Radio Resource Control) (3GPP TS 25.331), and has fields shown in FIG. 17. And, the measurement report (MR) message has fields shown in FIG. 18.

Meanwhile, to process a basic location service call as well as to measure the wireless quality, the radio network controller 11 executes a call processing step with the mobile station based on RRC (Radio Resource Control) to obtain longitude/latitude information of the mobile station (S215). And, the radio network controller 11 executes a call processing step with the NodeB 10 based on NBAP (Node-B Application Part) protocol to obtain RTT (Round Trip Time) of active sets (S217).

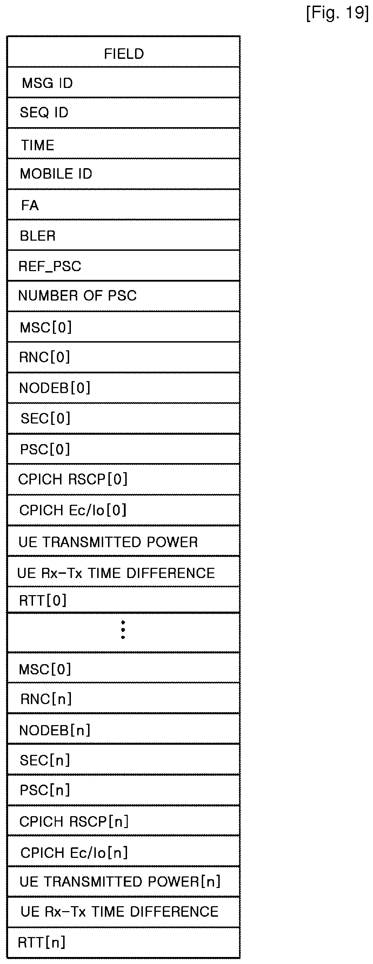

As such, the radio network controller 11 generates a wireless quality measurement result message using the collected data for wireless quality measurement and information obtained in a basic location service call processing step, and transmits the message to the operation and management server 13 (S219). The operation and management server 13 receives the wireless quality measurement result message from the radio network controller 11, and transmits the message to the wireless quality analysis device 200 in real time (S221). The wireless quality analysis device 200 analyzes a wireless quality of an area where the specific mobile station is located, based on the wireless quality measurement result message received from the operation and management server 13. Here, an example of the wireless quality measurement result message is described below with reference to FIG. 19.

Meanwhile, the radio network controller 11 estimates the location of the mobile station based on cell ID, RTT or longitude/latitude information obtained in the steps S215 and S217, separately from wireless quality measurement, and transmits the result to the mobile switching center 12 (S223). The mobile switching center 12 receives the location information of the mobile station from the radio network controller 11, and transmits the location information to the wireless quality analysis device 200 (S225).

FIG. 4 is a detailed view illustrating a measurement control and report step (S209) of FIG. 3 in accordance with an exemplary embodiment of the present invention.

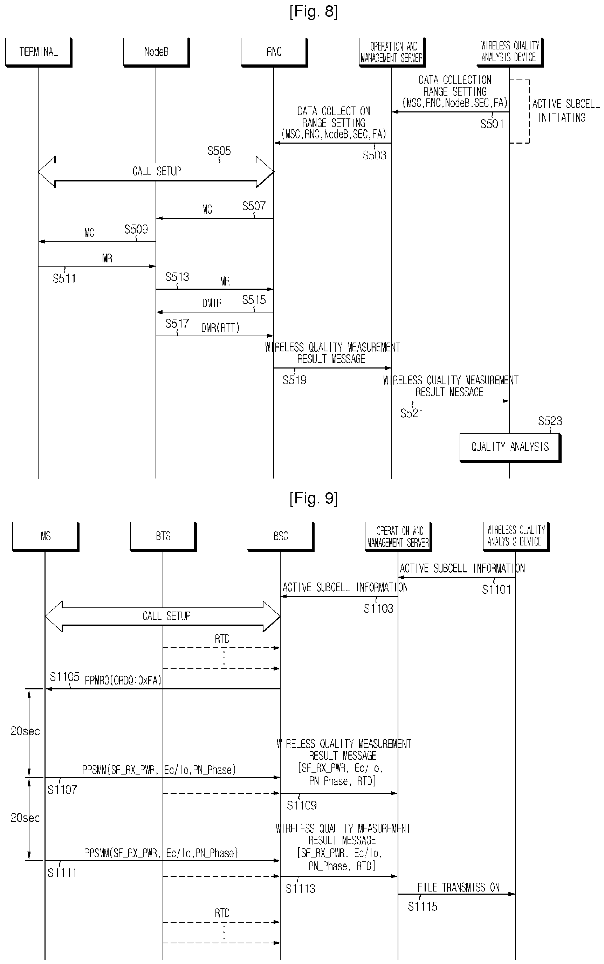

As shown in FIG. 4, the radio network controller 11 sorts the measurement control (MC) message by each type of data for wireless quality measurement, and transmits the message to the mobile station. That is, the radio network controller 11 transmits a first measurement control (MC) message for collection of RSCP and Ec/Io (S209-1), transmits a second measurement control (MC) for collection of Tx-Power and Tx-Rx Time Difference of the mobile station (S209-2), and transmits a third measurement control (MC) message for collection of BLER (S209-3). Here, the measurement control (MC) message is defined in the asynchronous WCDMA RRC (Radio Resource Control) (3GPP TS 25.331), and has fields shown in FIG. 9.

At this time, the radio network controller 11 adds rejection (No Report) of receipt of the measurement report (MR) to the first and second measurement control (MC) messages. Thus, the mobile station does not separately transmit a measurement report (MR) message in response to the first and second measurement control (MC) messages, and instead transmits information in response to the first and second measurement control (MC) messages together when transmitting a measurement report (MR) message in response to a third measurement control (MC) message (S211). Accordingly, it may reduce an occupation rate of radio resources and load of the mobile station and the radio network controller 11. And, according to exemplary embodiments, the mobile station may transmit the measurement report (MR) message whenever the mobile station receives the first and second measurement control (MC) messages. Meanwhile, the measurement report (MR) message has fields shown in FIG. 18.

FIG. 5 is a flowchart illustrating a method for measuring quality of a synchronous CDMA wireless network in accordance with an exemplary embodiment of the present invention, and a method of this exemplary embodiment measures quality of a wireless network using a mobile station of an idle state. The method is based on a location service (LCS).

As shown in FIG. 5, to activate a mobile station (MS) of an idle state, first, the wireless quality analysis device 400 transmits a location registration order (Ordered Registration) about the mobile station of an idle state to the mobile switching center 82 (901).

The mobile switching center 82 receives the location registration order from the wireless quality analysis device 400, and transmits a location registration request order message (Registration Request Order Message) to the base station controller 81 (S903), and the base station controller 81 transmits the location registration order (Ordered Registration) to the mobile station of an idle state (S905).

The mobile station receives the location registration order and transmits a location registration message (Registration Message) to the base station controller 81 (S907), and the base station controller 81 transmits a location update request message to the mobile switching center 82 (S909). The mobile switching center 82 updates location information of the mobile station to the home location register.

Meanwhile, the base station controller 81 receives the location registration message from the base station, and then extracts data for wireless quality measurement (for example, Ec/Io, PN_Phase) from the registration message received from the mobile station, produces a wireless quality measurement result message, and transmits the message to the operation and management server 83 (S911).

The operation and management server 83 received the wireless quality measurement result message from the base station controller 81, and transmits the message to the wireless quality analysis device 400 in real time (S913). The wireless quality analysis device 400 analyzes the wireless quality measurement result message, calculates the wireless quality of the wireless network, and display the quality.

Alternatively, the base station controller 81 does not produce the wireless quality measurement result message in the step S911, and instead directly transmits the location registration message received from the mobile station to the operation and management server 83 so that the operation and management server 83 produces a wireless quality measurement message.

According to the method for measuring quality of a wireless network of the present invention of FIG. 5, when measuring the wireless quality of the wireless network, it is possible to measure the quality of the wireless network once according to an order of an executor.

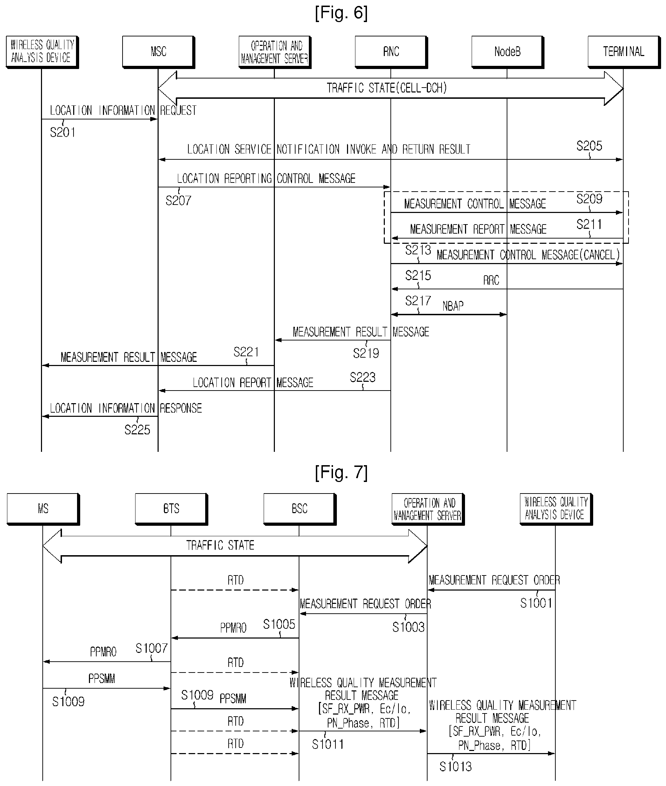

FIG. 6 is a flowchart illustrating a method for measuring quality of an asynchronous WCDMA wireless network in accordance with another exemplary embodiment of the present invention, and the method of this exemplary embodiment measures quality of a wireless network using a mobile station of a traffic state based on a location service (LCS). Here, a step having the same reference numeral as that of FIG. 3 is construed to perform the same operation, and thus the detailed description of the same operation is omitted, but a difference is described.

The measuring method of FIG. 3 includes a step (S203) for activating a mobile station of an idle state, but the measuring method of FIG. 6 maintains a connection state (CELL-DCH) of the mobile switching center 12, the base station controller 11, the base station 10 and the mobile station, and thus does not need the activating step of FIG. 3.

As shown in FIG. 6, the mobile switching center 12 receives a location information request about a specific mobile station of a traffic state, and then immediately transmits an LCS location notification invoke message to a corresponding mobile station, and receives an LCS location notification return result thereto (S205). And, a subsequent call processing step shown in FIG. 3 is performed. The measurement control and report steps (S209 and S211) of FIG. 6 may sort the measurement control (MC) message by each type of data for wireless quality measurement and transmit the message to the mobile station, as described with reference to FIG. 4.

FIG. 7 is a flowchart illustrating a method for measuring quality of a synchronous CDMA wireless network in accordance with another exemplary embodiment of the present invention, and the method of this exemplary embodiment measures quality of a wireless network using a mobile station of a traffic state.

As shown in FIG. 7, to measure quality of the wireless network using a mobile station of a traffic state, first the wireless quality analysis device 400 transmits a wireless quality measurement request order to the operation and management server 83 (S1001). At this time, a wireless quality measurement period is set in the wireless quality measurement request order. The operation and management server 83 transmits the wireless quality measurement request order to the base station controller 81 (S1003).

The base station controller 81 receives the wireless quality measurement request order from the operation and management server 83, and transmits a periodic pilot measurement report order (PPMRO) message to the base transceiver station 80 where the mobile station of a traffic state is located (S1005). And, the base transceiver station 80 transmits the periodic pilot measurement report order (PPMRO) message to the mobile station of a traffic state (S1007). Here, a wireless quality measurement period may be set in the periodic pilot measurement report order message (for example, OR DQ:OxFA), and a code indicating one-time measurement may be set in the periodic pilot measurement report order message (for example, ORDQ:OxFF).

The mobile station receives the periodic pilot measurement report order message and transmits a periodic pilot strength measurement message (PPSMM) to the base station controller 81 via the base transceiver station 80 (S1009). Here, the periodic pilot strength measurement message (PPSMM) includes a pilot strength (PILOT_STRENGTH) field, a PN phase (PH_Phase) field, a PN strength (PN Strength, Ec/Io) field and an SF_RX_PWR field indicating a received signal strength indication (RSSI) value.

The base station controller 81 receives the periodic pilot strength measurement message (PPSMM), and then extracts wireless quality measurement information (for example, SF_RX_PWR, Ec/Io or PN_Phase) in the periodic pilot strength measurement message (PPSMM), integrates the extracted wireless quality measurement information and a latest round trip delay (RTD) information among RTD received periodically from the base transceiver station 80, produces a wireless quality measurement result message, and transmits the message to the operation and management server 83 (S1011).

The operation and management server 83 transmits the wireless quality measurement result message received from the base station controller 81 to the wireless quality analysis device 400 in real time (S1013). The wireless quality analysis device 400 analyzes the wireless quality measurement result message, calculates the quality of the wireless network and displays the quality.

Alternatively, the base station controller 81 does not produce the wireless quality measurement result message in the step S1011, and instead directly transmits the periodic pilot strength measurement message (PPSMM) received from the mobile station and the RTD information to the operation and management server 83 so that the operation and management server 83 produces a wireless quality measurement result message.

Meanwhile, in the case that a wireless quality measurement period is set in the periodic pilot measurement report order (PPMRO) message which is periodically received from the base transceiver station 80 in the step S1007, the mobile station of a traffic state transmits the periodic pilot strength measurement message (PPSMM) to the base station controller 81 according to the set period. The base station controller 81 extracts wireless quality measurement information from the periodic pilot strength measurement message (PPSMM) received periodically from the mobile station, integrates the extracted quality measurement information and the latest RTD information among RTD received periodically from the base station 80, produces a wireless quality measurement result message again, and transmits the message to the operation and management server 83. The operation and management server 83 transmits the wireless quality measurement result message to the wireless quality analysis device 400 in real time or by a predetermined period.

And, in the method for measuring quality of a wireless quality according to the present invention with reference to FIG. 7, the base station controller 81 receives the wireless quality measurement request order from the operation and management server 83, and then the base station controller 81 may transmit a pilot measurement report order (PMRO) message to the base transceiver station 80 where the mobile station of a traffic state is located, and in this case, the mobile station transmits a pilot strength measurement message (PSMM) to the base station controller 81. However, the periodic pilot strength measurement message (PPSMM) further includes an SF_RX_PWR field indicating received signal strength indication (RSSI) value, compared with the pilot strength measurement message (PSMM), and thus it is preferred that the base station controller 81 transmits the periodic pilot strength measurement report order (PPMRO) message to the mobile station.

According to the method for measuring quality of a wireless network of the present invention of FIG. 7, when measuring a wireless quality of the wireless network, it is possible to measure quality of the wireless network once or periodically according to an order of an executor.

FIG. 8 is a flowchart illustrating a method for measuring quality of an asynchronous WCDMA wireless network in accordance with a further exemplary embodiment of the present invention.

As shown in FIG. 8, first, the wireless quality analysis device 200 sets a data collect ing range (cell) through the operation and management server 13 (S501 and S503). That is, the wireless quality analysis device 200 controls activation of a subcell (MSC, RNC, NodeB, SEC, FA) through the operation and management server 13, which is to collect data for wireless quality measurement.

In the case that any one mobile station sets up a call in the set range, the radio network controller 11 managing a corresponding mobile station transmits a measurement control (MC) message to the corresponding mobile station via the base station 10 (S505 to S509).

The mobile station receives the measurement control (MC) message, and then transmits a measurement report (MR) message in response to the measurement control (MC) message to the NodeB 10 (S511) and transmits the measurement report (MR) message to the radio network controller 11. At the time of receiving the measurement report (MR) message, the radio network controller 11 transmits a dedicated measurement initiation report (DMIR) message to the NodeB where the mobile station is executing a service (S515), and the corresponding NodeB 10 transmits RTT to the radio network controller 11 through a dedicated measurement report (DMR) message (S517).

Subsequently, the radio network controller 11 integrates the measurement report (MR) message received from the NodeB 10 and the dedicated measurement report (DMR) message, produces a wireless quality measurement result message and transmits the message to the operation and management server 13 (S519). This step may be performed in real time or by unit of memory block.

Meanwhile, the wireless quality analysis device 200 receives the wireless quality measurement result message from the operation and management server 13 and analyzes a wireless quality of a cell boundary based on the received wireless quality measurement result message (S521 and S523). And, the wireless quality analysis device 200 outputs the analysis result through a graphic user interface (GUI). Here, the wireless quality analysis device 200 analyzes a receiving quality of the mobile station, for example CPICH RSCP, CPICH Ec/Io, BLER, UE transmitted power or UE Rx-Tx time difference.

FIG. 9 is a flowchart illustrating a method for measuring quality of a synchronous CDMA wireless network in accordance with a further embodiment of the present invention, and the method of the exemplary embodiment measures a wireless quality when a mobile station is in a traffic state, in such situation that a subcell to measure the wireless quality is set by the wireless quality analysis device 400.

As shown in FIG. 9, to automatically measure a wireless quality of a specific area, first, the wireless quality analysis device 400 sets a subcell (MSC, BSC, BTS or FA) to measure the wireless quality, and transmits information of a corresponding subcell to the operation and management server 83 (S1101). That is, the wireless quality analysis device 400 sets a data collecting range for wireless quality measurement.

The operation and management server 83 receives subcell information and then transmits the subcell information to the base station controller 81 located in the corresponding subcell (S1103). The base station controller 81 activates or inactivates the subcell designated by the wireless quality analysis device 400, and when the mobile station is in a traffic state in the activated subcell, measures the wireless quality.

That is to say, in the case that any one mobile station is in a traffic state in an activated subcell, the base station controller 81 transmits a periodic pilot measurement report order (PPMRO) message to the mobile station via the base transceiver station 80 (S1105). Here, a wireless quality measurement period is set in the periodic pilot measurement report order message (for example, ORDQ:OxFA, i.e. 20 sec).

The mobile station receives the periodic pilot measurement report order (PPMRO) message, and then transmits a periodic pilot strength measurement message (PPSMM) to the base station controller 81 via the base transceiver station 80 according to the period set in the periodic pilot measurement report order message (S1107). Here, the periodic pilot strength measurement message (PPSMM) includes a pilot strength (PILOT_STRENGTH) field, a PN phase (PH_Phase) field, a PN strength (PN Strength, Ec/Io) field, and an SF_RX_PWR field indicating a received signal strength indication (RSSI) value.

The base station controller 81 receives the periodic pilot strength measurement message (PPSMM), and then extracts quality measurement information (for example, SF_RX_PWR, Ec/Io or PN_Phase) in the periodic pilot strength measurement message (PPSMM), integrates the extracted quality measurement information and a latest RTD information among RTD received periodically from the base transceiver station 80, produces a wireless quality measurement result message, and transmits the message to the operation and management server 83 (S1109).

And, the mobile station in a traffic state transmits the periodic pilot strength measurement message (PPSMM) to the base station controller 81 according to the wireless quality measurement period in the periodic pilot measurement report order (PPMRO) received from the base station controller 81 in the step S1105 (S1111). And, the base station controller 81 extracts wireless quality measurement information from the periodic pilot strength measurement message (PPSMM), integrates the extracted wireless quality measurement information and the latest RTD information among RTD received periodically from the base station 80, produces a wireless quality measurement result message again, and transmits the message to the operation and management server 83 (S1113).

The operation and management server 83 stores the wireless quality measurement result message received periodically from the base station controller 81 as described above, integrates the message, and transmits the message to the wireless quality analysis device 400 (S1115). That is, the operation and management server 83 periodically transmits the wireless quality measurement result message to the wireless quality analysis device 400. It is preferred to use a file transfer protocol (FTP). The operation and management server 83 analyzes the wireless quality measurement result message, calculates and displays the wireless quality of the wireless network.

Alternatively, the base station controller 81 does not produce the wireless quality measurement result message in the steps S 1109 and S1113, and instead directly transmits the periodic pilot strength measurement message (PPSMM) and RTD information received from the mobile station to the operation and management server 83 so that the operation and management server 83 produces a wireless quality measurement result message.

And, the operation and management server 83 stores the wireless quality measurement result message received periodically from the base station controller 81 and transmits the message to the wireless quality analysis device 400 in the step S1115, but, according to another exemplary embodiments, the operation and management server 83 may transmit the wireless quality measurement result message to the wireless quality analysis device 400 in real time whenever the operation and management server 83 receives the wireless quality measurement result message from the base station controller 81. However, in the case that the operation and management server 83 transmits the wireless quality measurement result message to the wireless quality analysis device 400 in real time, load is applied to the operation and management server 83, and thus it is preferred to integrate and transmit the wireless quality measurement message according to a predetermined period.

The method for measuring quality of a wireless network of the present invention of FIG. 9 designates in advance the range of a subcell to measure the wireless quality, and when a mobile station in a corresponding range is in a traffic state, automatically measures the wireless quality to improve the operational effectiveness of wireless quality measurement.

Meanwhile, in the method for measuring quality of a wireless quality of FIG. 9, while the wireless quality is automatically measured using the mobile station in the activated subcell, a wireless quality measurement request order may be transmitted from the wireless quality analysis device 400 to the base station controller 81. In this case, regardless of automatic wireless quality measurement, the base station controller 81 transmits the periodic pilot measurement report order (PPMRO) message having no period to the mobile station and receives the periodic pilot strength measurement message (PPSMM), as shown in FIG. 7. And, the base station controller 81 generates the wireless quality measurement result message and transmits the message to the operation and management server 83. That is, while the wireless quality is automatically measured, one-time wireless quality measurement may be executed.

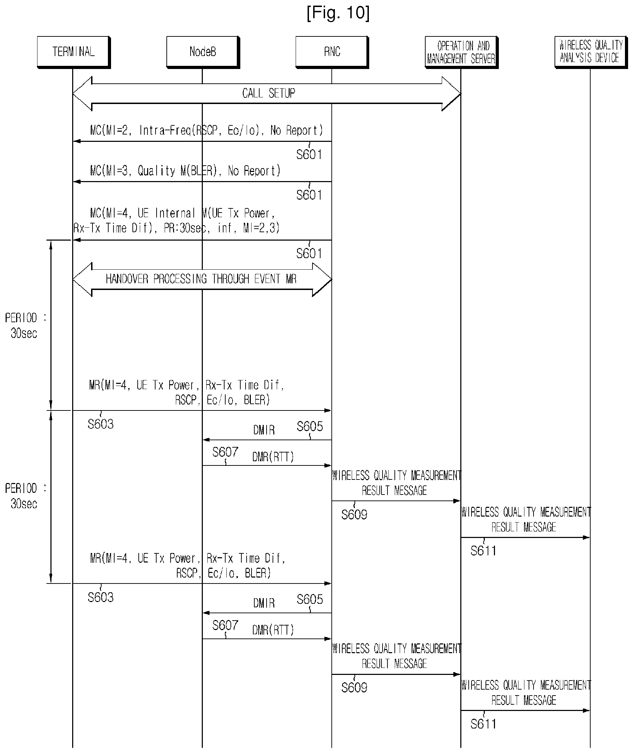

FIG. 10 is a flowchart illustrating a method for measuring quality of an asynchronous WCDMA wireless network in accordance with a still further exemplary embodiment of the present invention, and the method of this exemplary embodiment shows an example of generating a periodic measurement report (MR) message to collect data for wireless quality measurement.

Although not shown in FIG. 10, as shown in FIG. 8, first, the wireless quality analysis device 200 sets a data collecting range (cell) through the operation and management server 13 (S501 and S503). That is, the wireless quality analysis device 200 controls activation of a subcell (MSC, RNC, NodeB, SEC or FA) to collect data for wireless quality measurement through the operation and management server 13.

In the case that any one mobile station sets up a call in the set range, the radio network controller 11 managing a corresponding mobile station sorts the measurement control (MC) message by each type of data for wireless quality measurement, and transmits the message to the corresponding mobile station (S601). That is, the radio network controller 11 sorts the measurement control (MC) message into a first measurement control (MC) message for collection of RSCP and Ec/Io, a second measurement control (MC) for collection of BLER, and a third measurement control (MC) message for collection of UE Tx-Power and UE Tx-Rx Time Difference of the mobile station by each type (Measurement Identity), and individually transmits the message to the mobile station.

At this time, the radio network controller 11 sets rejection (No Report) of receipt of the measurement report (MR) message to the first and second MC messages, and adds a measurement report (MR) message generating period (PR: 30 sec), number of times (inf) and a list of the included measurement control (MC) message (MI=2, 3) to the third MC message, i.e. the last MC message to be transmitted to the mobile station.

The mobile station receives the measurement control (MC) message according to type of data for wireless quality measurement, and then transmits the measurement report (MR) message according to a transmission method (period, number of times, an inclusion list) set in the third measurement control (MC) message (S603). The measurement report (MR) message includes data for wireless quality measurement corresponding to the first, second and third measurement control (MC) messages. That is, the measurement report (MR) message includes RSCP and Ec/Io, BLER, UE Tx Power and UE Rx-Tx time difference of the mobile station. At this time, in the case that the mobile station hands over during reporting the measurement report message periodically, handover may be processed by transmitting and receiving the measurement control (MC) message and the measurement (MR) message once.

Meanwhile, at the time of receiving the measurement report (MR) message, the radio network controller 11 transmits dedicated measurement initiation report (DMIR) to NodeB 10 that the mobile station is servicing as an active set (S605), and the NodeB 10 receives the DMIR and transmits the dedicated measurement report (DMR) including RTT to the radio network controller 11 (S607).

Next, the radio network controller 11 integrates data for wireless quality measurement, which is included in the measurement report (MR) message received from the mobile station and internal management data (RTT) obtained through the DMR, produces a wireless quality measurement result message and transmits the message to the operation and management server 13 (S609). The operation and management server 13 stores the collected wireless quality measurement result message, and then transmits the message to the wireless quality analysis device 200 in a file type in real time or periodically (S611).

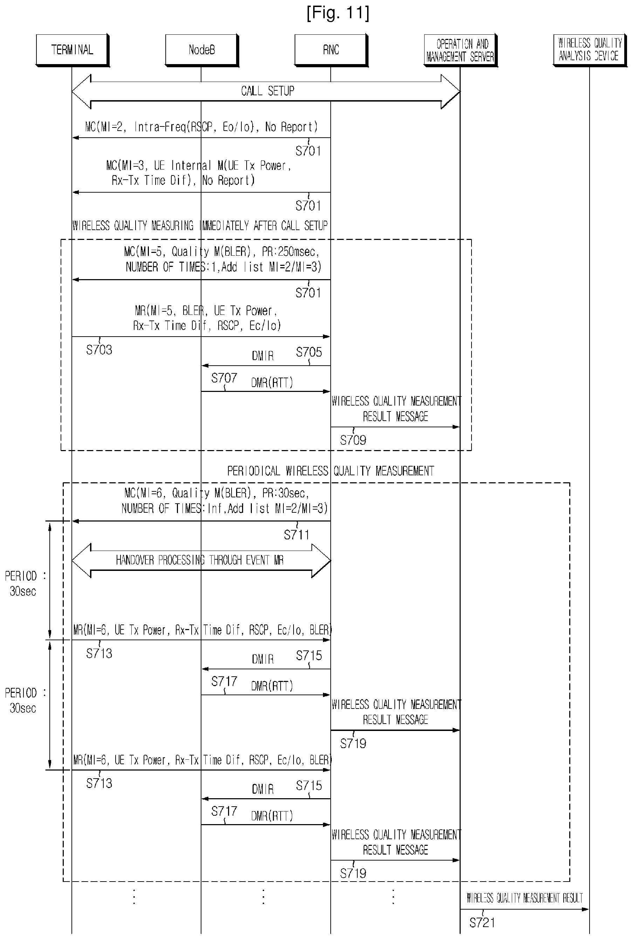

FIG. 11 is a flowchart illustrating a method for measuring quality of an asynchronous WCDMA wireless network in accordance with a still even further exemplary embodiment of the present invention, and the method of this exemplary embodiment shows another example of generating a periodic measurement report (MR) message to collect data for wireless quality measurement.

The network quality measuring method of FIG. 11 is basically similar to the network quality measuring method of FIG. 10. However, in FIG. 10, the radio network controller 11 transmits a measurement control (MC) message having a predetermined period to the mobile station, and the mobile station transmits the measurement report (MR) message to the radio network controller 11 according to the set period included in the measurement control (MC) message. In this case, a mobile communication service is provided to the mobile station through a traffic channel, but after all traffic services end in a reference period, data for network quality measurement may be not collected. Thus, it may be required for call processing capable of receiving a wireless network quality measurement message immediately after a call is set up.

As shown in FIG. 11, in the case that any one mobile station sets up a call in the activated cell, the radio network controller 11 transmits a measurement control (MC) message by each type of data for wireless quality measurement (S701). At this time, the radio network controller 11 sets a transmission period of a measurement report (MR) message as a short time (for example, 250 msec) and the number of times as one time to the last measurement control (MC) message transmitted to the mobile station. Thus, the mobile station transmits the measurement report (MR) message to the radio network controller 11 as soon as the mobile station receives the third measurement control (MC) message (S703).

At the time of receiving the measurement report (MR) message, the radio network controller 11 transmits dedicated measurement initiation report (DMIR) to the NodeB 10 that the mobile station is servicing as an active set (S705), and the NodeB 10 receives the DMIR and transmits the dedicated measurement report (DMR) including the RTT to the radio network controller 11 (S707).

Next, the radio network controller 11 integrates data for wireless quality measurement, which is included in the measurement report (MR) message received from the mobile station and internal management data (RTT) obtained through the DMR, produces a wireless quality measurement result message and transmits the message to the operation and management server 13 (S709).

As described above, the radio network controller 11 collects data for wireless quality measurement from the mobile station immediately after a call is set up and then transmits the measurement control (MC) message to the mobile station so as to periodically receive the measurement report (MR) message (S711). Here, the measurement control (MC) message includes information of a time period, number of times and a list of included measurement control message for transmitting the measurement report (MR) message.

At the time of receiving the measurement report (MR) message, the radio network controller 11 transmits DMIR to the NodeB 10 that the mobile station is servicing as an active set (S715), and the NodeB 10 receives the DMIR and transmits the DMR including RTT to the radio network controller 11 (S717).

Next, the radio network controller 11 integrates data for wireless quality measurement, which is included in the measurement report (MR) message received from the mobile station and internal management data (RTT) obtained through the DMR, produces a wireless quality measurement result message, and transmits the message to the operation and management server 13 (S721). The operation and management server 13 stores the collected wireless quality measurement result message, and then transmits the message to the wireless quality analysis device 200 in a file type in real time or periodically (S721).

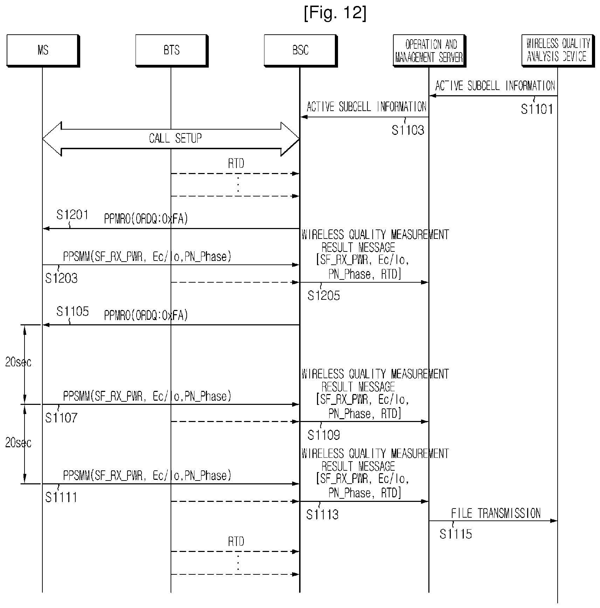

FIG. 12 is a flowchart illustrating a method for measuring quality of a synchronous CDMA wireless network in accordance with a still further exemplary embodiment of the present invention, and the method of this exemplary embodiment shows another example of measuring a wireless quality when any one mobile station is in a traffic state, in such a situation that a subcell to measure the wireless quality is set by the wireless quality analysis device 400. Here, a step having the same reference numeral as that of FIG. 9 is construed to perform the same operation, and thus the detailed description of the same operation is omitted, but a difference is described.

In FIG. 9, the base station controller 81 transmits a periodic pilot measurement report order (PPMRO) message having a predetermined period to the mobile station, and the mobile station transmits a periodic pilot measurement strength measurement message (PPSMM) to the base station controller 81 according to the set period included in the periodic pilot measurement report order message. In this case, a mobile communication service is provided to the mobile station through a traffic channel, but after all traffic services end in a reference period, data for wireless quality measurement may be not collected. Thus, it may be required for call processing capable of receiving a wireless network quality measurement message immediately after a call is set up.

As shown in FIG. 12, when any one mobile station is in a traffic state in an activated subcell, the base station controller 81 transmits a periodic pilot measurement report order (PPMRO) message to the mobile station via the base transceiver station 80 (S1201). Here, a wireless quality measurement period is not set in the periodic pilot measurement report order (PPMRO) message (for example, ORDQ:OxFF).

The mobile station receives the periodic pilot measurement result order (PPMRO) message, and then transmits the periodic pilot strength measurement message (PPSMM) to the base station controller 81 via the base transceiver station 80 (S1203). Here, the periodic pilot strength measurement message (PPSMM) includes a pilot strength (PILOT_STRENGTH) field, a PN phase (PH_Phase) field, a PN strength (PN Strength, Ec/Io) field, and an SF_RX_PWR field indicating a received signal strength indication (RSSI) value.

The base station controller 81 receives the periodic pilot strength measurement message (PPSMM), and then extracts wireless quality measurement information (for example, SF_RX_PWR, Ec/Io or PN_Phase) in the periodic pilot strength measurement message (PPSMM), integrates the extracted wireless quality measurement information and a latest RTD information among RTD received periodically from the base transceiver station 80, produces a wireless quality measurement result message, and transmits the message to the operation and management server 83 (S1205).

Next, the base station controller 81 transmits the periodic pilot measurement report order (PPMRO) message to the mobile station via the base transceiver station 80 (S1105). And, the base station controller 81 performs a subsequent step shown in FIG. 9 to collect data for wireless quality measurement.

According to this exemplary embodiment of the present invention, in the case of a call ending in a short period, such as SMS or data, the method for measuring quality of a wireless network is capable of receiving the wireless network quality measurement message.

Meanwhile, it requires handover between a sector and a sector and between a base station and a base station in a mobile communication system for continuity of a mobile service. The term, handover means that, when a mobile station in an active state moves from a corresponding cell boundary to an adjacent cell boundary, the mobile station is automatically synchronized to a new traffic channel of an adjacent base station, thereby maintaining a continuous active state.

To perform handover, generally, a mobile station transmits its own wireless network quality information to a base station. The wireless network quality is measured periodically or at a specific event. Then, the base station 10 or 80 receives wireless network quality information from the mobile station, and transmits it to the radio network controller 11 or the base station controller 81, and the radio network controller 11 or the base station controller 81 analyzes the received information and determines whether or not to perform handover. And, the radio network controller 11 or the base station controller 81 transmits a determined message to the mobile station thereby to execute a handover step.

And, the mobile communication system controls power for good service quality. The mobile communication system controls power for a maximum call capacity between a corresponding base station and an adjacent base station, and expanded life of a battery and a uniform call quality of the mobile station (i.e. a terminal).

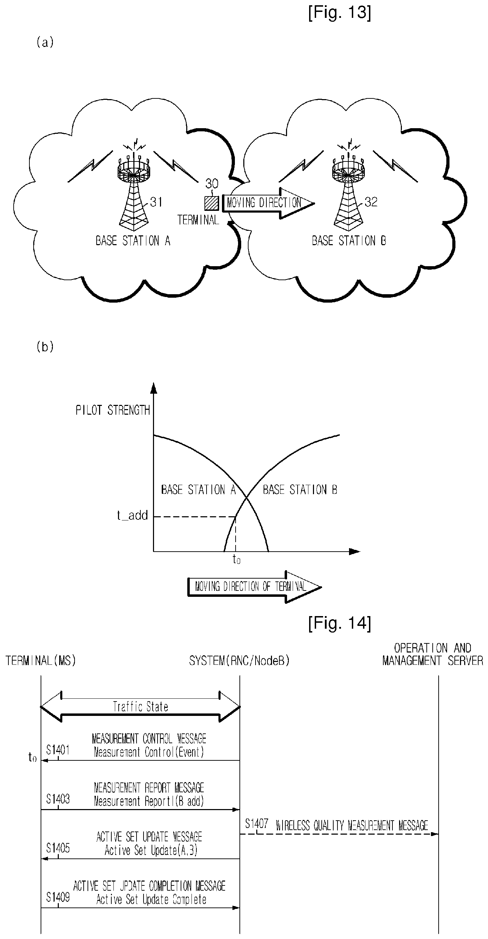

FIG. 13a shows a mobile station 30 in an active state moving from boundary of a base station A (BTS/NodeB) 31 to boundary of an adjacent base station B 32, and FIG. 13b is a graph illustrating a change of pilot signal strength (Ec/Io) of the mobile station 30 of a handover state.

In the graph of FIG. 13b, when moving from the base station A 31 to the base station B 32, in the case that Ec/Io is above or below a specific level, the mobile station transmits a measurement report message (in the case of WCDMA) or a pilot strength measurement message (PSMM) (in the case of CDMA) to the system.

Hereinafter, a method for measuring quality of a wireless network using a message transmitted and received in a handover step is described with reference to FIGs. 13a and 13b.

FIG. 14 is a view illustrating a handover control process using an event measurement report message in an asynchronous WCDMA network in accordance with an exemplary embodiment of the present invention.

In FIG. 14, when Ec/Io of the base station B 32 is above a preset level in a WCDMA system, the mobile station 30 transmits a measurement report message to the wireless network so as to add the base station B 32. And, the wireless network receives a measurement report message from the mobile station 30 and control handover.

First, the radio network controller 11 transmits a system information block (SIB) or a measurement control (MC) message to the mobile station 30 for handover processing (S1401). Here, the measurement control (MC) message is defined in an asynchronous WCDMA radio resource control (RRC) (3GPP TS 25.331), includes fields shown in FIG. 17, and is used in controlling a terminal in the system.

Meanwhile, in the case that the mobile station 30 satisfies handover condition (T_Add) in an active state, the mobile station 30 transmits a measurement report (MR) message, requesting to add (ADD) the base station B 32, to the system (RAN: a base station (NodeB), a radio network controller (RNC)) (S1403).

Then, the system receives the measurement report (MR) message from the mobile station 30, and then checks whether the base station B 32 having an ADD request is included in a neighbor list (S1407). In the case that the base station B is included in the neighbor list, the system assigns resource of the base station B 32 and then transmits an active set update (ASU) message to the mobile station 30 (S1405). And, the system transmits the measurement report (MR) message received from the mobile station 30 to the operation and management server 13 (S1407).

The mobile station 30 receives the active set update (ASU) message from the system, and then obtains a channel of the base station B 32 and transmits an active set update complete (ASUC) message to the system (S1409).

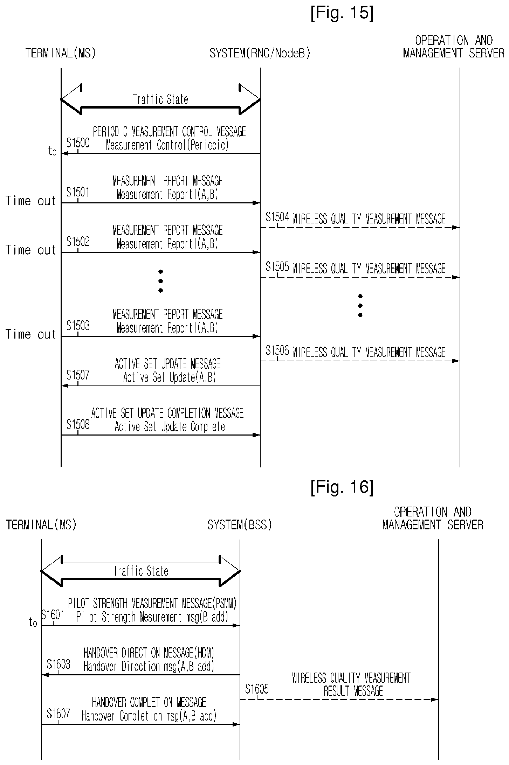

FIG. 15 is a view illustrating a call process using a periodic measurement report (PMR) message in the asynchronous WCDMA network.

First, the radio network controller 11 transmits a system information block (SIB) or a periodic measurement control (MC[Periodic]) message to the mobile station 30 (S1500).

Then, the mobile station 30 periodically transmits a measurement report message to the system (RAN: base station (NodeB), radio network controller (RNC)) at the preset time (S1501, S1502, S1503), and the system periodically receives the measurement report message from the mobile station 30 and then transmits the message to the operation and management server 13 (S1504, S1505, S1506).

At this time, when the system receives the measurement report message above a critical condition, the system transmits the active set update (ASU) message to the mobile station 30 (S1507), and the mobile station 30 completes a handover processing and then transmits the active set update complete (ASUC) message to the system (S1508).

FIG. 16 is a view illustrating a handover control process using a pilot strength measurement message (PSMM) in a synchronous CDMA network in accordance with an exemplary embodiment of the present invention.

In FIG. 16, when Ec/Io of the base station B 32 is above a preset level, the mobile station 30 transmits a pilot strength measurement message (PSMM) to the wireless network so as to add the base station B 32, and the wireless network receives a pilot strength measurement message (PSMM) from the mobile station 30 and controls handover.

First, when handover conditions (T_Add) are satisfied in an active state, the mobile station 30 transmits the pilot strength measurement message (PSMM) requesting to add the base station B 32 to the wireless network, i.e. a base station system (BSS) including the base station controller (BSC) (S1601).

Then, the base station system (BSS) checks whether the base station B 32 requested ADD from the mobile station 30 is included in a neighbor list. In the case that the base station B 32 is included in the neighbor list, the base station system assigns resource of the base station B 32 and then transmits a handover direction message (HDM) to the mobile station 30 (S1603). And, the base station system extracts data for wireless quality measurement from the pilot strength measurement message (PSMM) received from the mobile station 30, produces a wireless quality measurement result message, and transmits the message to the operation and management (O&M) server 83 (S1605). The operation and management server 83 receives the wireless quality measurement result message, and then transmits the message to the wireless quality analysis device 400, and the wireless quality analysis device 400 analyzes the wireless quality measurement result message, and measures a wireless quality of an area where a corresponding mobile station 30 is located.

The mobile station 30 receives the handover direction message (HDM) from the base station system, and then obtains a channel of the base station B 32 and transmits a handover completion message (HCM) to the base station system (S1607).

FIG. 19 is a view illustrating a wireless quality measurement result message in a WCDMA system in accordance with an exemplary embodiment of the present invention.

As shown in FIG. 19, the wireless quality measurement result message in the WCDMA system has a Msg ID field indicating message type, a Seq ID field indicating a message sequence number occurring in each job, a Time field indicating a message occurring time point, a Mobile ID field indicating identification of a terminal, an FA field indicating a service frequency, a REF_PSC field indicating a reference PSC (Packet Switching Cluster), a Number of PSC field indicating the measured PSC number, an MSC filed indicating the MSC number of the system, a RNC field indicating the radio network controller number of the system, a NodeB field indicating the NodeB number of the system, an SEC field indicating the sector number of the system, a PSC field indicating the PSC number of the system, a CPICH (Common PIlot CHannel) RSCP (Received Signal Code Power) field for storing the receiving quality obtained from the terminal, a CPICH (Common PIlot CHannel) Ec/Ic field, a BLER (Block Error Rate) field, a UE Transmitted Power field, a UE Rx_Tx Time Difference field, and a RTT field.

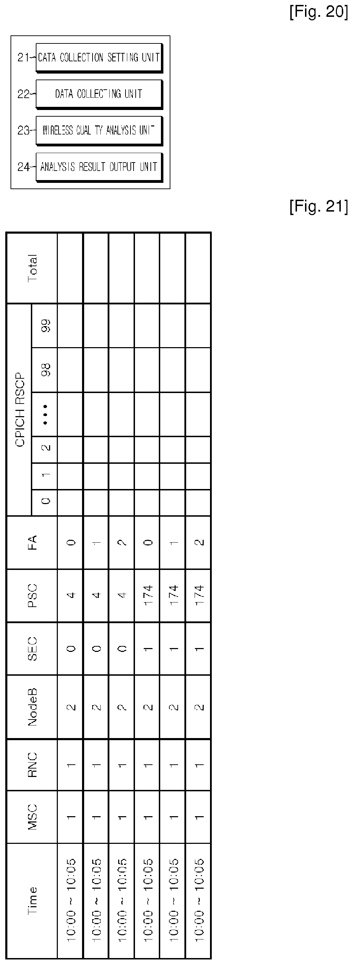

FIG. 20 is a block diagram illustrating the wireless quality analysis device of an asynchronous WCDMA wireless network in accordance with an exemplary embodiment of the present invention.

As shown in FIG. 20, the wireless quality analysis device 200 includes a data collection range setting unit 21, a data collecting unit 22, a wireless quality analysis unit 23 and an analysis result outputting unit 24.

The data collection range setting unit 21 controls the operation and management server 13 to set and activate the mobile switching center (MSC) 12, the radio network controller (RNC) 11, the base station (NodeB) 10, sector and frequency assignment (FA) which are to collect data for wireless quality measurement.

In the case that the wireless quality analysis device 200 collects all data for wireless quality measurement which occur from the wireless network, overload may occur to the wireless quality analysis device 200. The data collection range setting unit 21 may select a collection range of a wireless quality measurement message.

That is, the data collection range setting unit 21 activates the mobile switching center 12, the radio network controller 11, sector and frequency assignment (FA), which are to collect data for wireless quality measurement, and in the case that a call is set up in the activated subcell, the data collection range setting unit 21 makes the radio network controller (RNC) 11 request a measurement report (MR) message (Periodic MR, Event MR) to the mobile station and the operation and management server 13 collect the measurement report (MR) message (Periodic MR, Event MR) of the activated subcell.

And, the data collection range setting unit 21 sets the type of the measurement report (MR) message (Periodic MR, Event MR) to be transmitted from the terminal. For example, the Event MR message is signaling occurring in the conditions for performing handover and thus occurs in a boundary between cells, and the Periodic MR is signaling being periodically received. Thus, the data collection range setting unit 21 may collect all of the Event MR message and the Periodic MR message or selectively collect the Event MR message and the Periodic MR message in consideration of overload applied to the system.

The data collecting unit 22 receives the collected measurement report (MR) message (Periodic MR, Event MR) according to the preset period, which is collected through the operation and management server 13 by setting of the data collection range setting unit 21.

Alternatively, the operation and management server 13 may produce a wireless quality measurement result message shown in FIG. 19 from the collected message, and transmit the wireless quality measurement result message to the data collecting unit 22.

The wireless quality measurement result message produced by the operation and management server 13 is formed by combining the measurement report (MR) message (Periodic MR, Event MR) received from the mobile station and data managed in the system, and is changeable according to system manufacturing companies. For example, round trip time (RTT) is internal information of the system, and is obtained based on standard (UTRAN (Universal Terrestrial Radio Access Network) lub Interface NBAP signalling: 3GPP TS 25.433) between the radio network controller (RNC) and the base station (NodeB). The RTT obtaining step is described below.

First, the radio network controller (RNC) 12 transmits a dedicated measurement initiation request [RTT] for obtaining the RTT to the base station (NodeB) 11. Then, in response to the request, the base station (NodeB) transmits a dedicated measurement report [RTT] message including a RTT value to the radio network controller (RNC) 12.

Then, the radio network controller (RNC) 12 integrates the dedicated measurement report [RTT] received from the base station (NodeB) and the wireless quality information obtained through the measurement report (MR) message from the mobile station, produces a wireless quality measurement result message, and transmits the message to the operation and management server 13. At this time, it is preferred to perform the above steps whenever the system transmits a location information message to the wireless quality analysis device 200 so as to transmit the correct RTT.

The wireless quality analysis unit 23 extracts various data for wireless quality measurement from the measurement report (MR) message (Periodic MR, Event MR) collected by the data collecting unit 22, and analyzes the wireless quality of the whole cell boundary. The wireless quality analysis unit 23 may analyze according to units of mobile switching center (MSC), radio network controller (RNC), base station (NodeB), sector, FA and sector, area utilizing the RTT, and time range.

The analysis result outputting unit 24 outputs the result analyzed by the wireless quality analysis unit 23 through a graphic user interface (GUI).

Hereinafter, an example of a wireless network quality result analyzed by the wireless quality analysis device 200 in a WCDMA wireless network quality measuring system according to the present invention is described with reference to drawings.

FIG. 21 is a view illustrating an analysis result of a receiving sensitivity (CPICH RSCP) of a mobile station analyzed by the wireless quality measurement device using a wireless quality measurement result message in accordance with an exemplary embodiment of the present invention, and shows an analysis of occurrence frequency of the signal strength of CPICH RSCP for each of the mobile switching center (MSC), radio network controller (RNC), base station (NodeB), sector (SEC) and frequency assignment (FA) by unit of 5 minutes. Here, a RSCP index value may be replaced with expression of actual dBm.

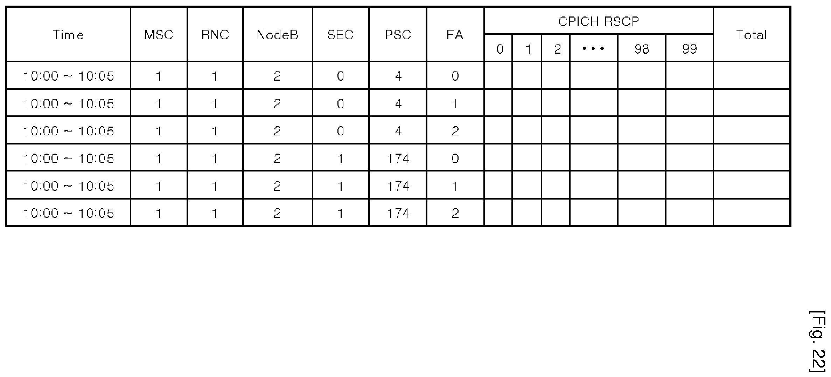

And, FIG. 22 is a view illustrating an analysis result of a pilot signal strength (CPICH Ec/Io) analyzed by the wireless quality analysis device using a wireless quality measurement result message in accordance with an exemplary embodiment of the present invention, and shows an analysis of occurrence frequency of the pilot signal strength (CPICH Ec/Io) for each of the mobile switching center (MSC), radio network controller (RNC), base station (NodeB), sector (SEC) and frequency assignment (FA) by unit of 5 minutes. Here, a RSCP index value may be replaced with expression of actual dBm.

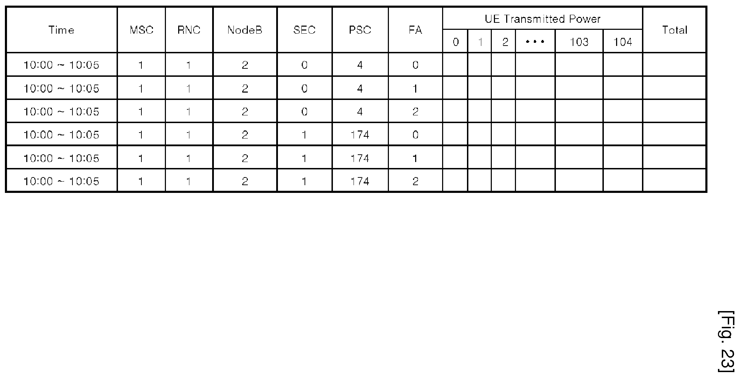

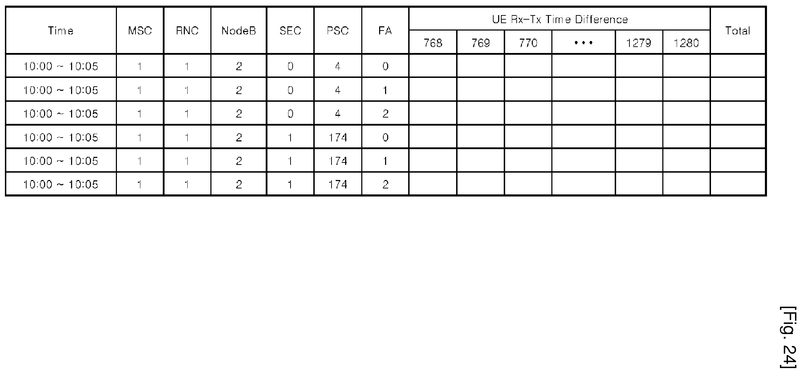

FIG. 23 is a view illustrating an analysis result of a user equipment transmitted power (UE Transmitted Power) analyzed by the wireless quality analysis device using a wireless quality measurement result message in accordance with an exemplary embodiment of the present invention, and FIG. 24 is a view illustrating an analysis result of User Equipment Receiving and Transmitting Time Difference (UE Rx-Tx Time Difference) analyzed by the wireless quality analysis device using a wireless quality measurement result message in accordance with an exemplary embodiment of the present invention.

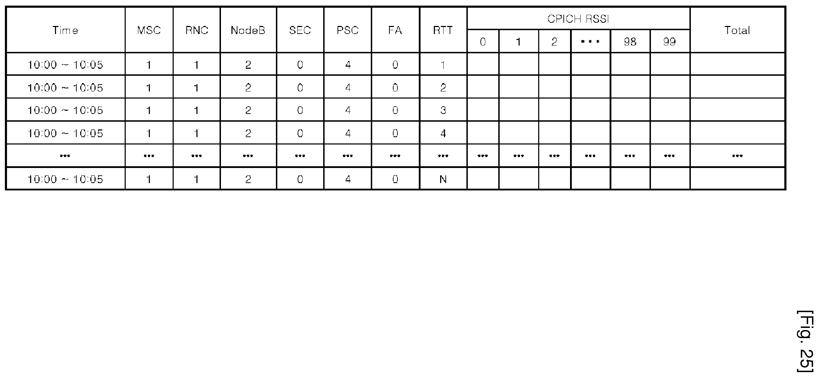

And, FIG. 25 is a view illustrating an analysis result of a receiving sensitivity of a mobile station (CPICH RSCP) according to round trip time (RTT) analyzed by the wireless quality analysis device using a wireless quality measurement result message in accordance with an exemplary embodiment of the present invention. The wireless quality analysis device may analyze Ec/Io, UE Tx Power or UE Rx_Tx Time Difference according to the RTT.

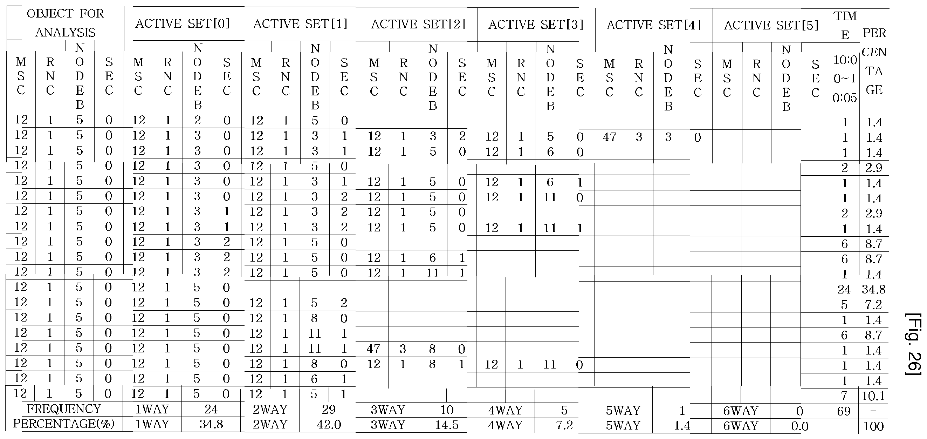

Meanwhile, FIG. 26 is a view illustrating an analysis result of a wireless quality of a handover overlapping area analyzed by the wireless quality analysis device using a wireless quality measurement result message in accordance with an exemplary embodiment of the present invention, and shows an analysis result of a wireless quality of a handover overlapping area based on MSC ID=12, RNC=1, NodeB=5 and SEC=0 (Alpha). Here, an active set is formed by tabling "Active Set" information included in each wireless quality measurement message, and is quantified in each message. At this time, the number of Active Set represents a corresponding sector as 1-way overlapping area (1 Way)=34.8%, 2-way overlapping area (2 Way)=42%, 3-way overlapping area (3 Way)=14.5%, 4-way overlapping area (4 Way)=7.2%, and 5-way overlapping area (5 Way)=1.4%. And, it may analyze which base station or sector a corresponding sector is servicing with as an active set.

### Industrial Applicability

The above-described present invention measures and analyzes quality of a wireless network using a message reported from a subscriber terminal to the system for handover and/or service quality maintenance, thereby measuring and analyzing the wireless quality of the whole mobile communication network while remarkably reducing costs and human resources required to measure quality of the wireless network.

## Claims

1. A method for measuring a wireless quality of a wireless network using a location service in a mobile communication system composed of a wireless quality analysis server (200, 400) for analyzing the wireless quality, a mobile switching center (12, 82) and a base station controller (11, 81), the method comprising:
(a) the wireless quality analysis server (200, 400) requesting a location service about a specific subscriber terminal to the mobile switching center (12, 82);
(b) the mobile switching center (12, 82) transmitting a location report request of the subscriber terminal to the base station controller (11, 81);
(c) the base station controller (11, 81) transmitting a wireless quality measurement request to the subscriber terminal based on the location report request;
(d) the base station controller (11, 81) receiving a wireless quality measurement report from the subscriber terminal; and
(e) the base station controller (11, 81) extracting data for wireless quality measurement from the wireless quality measurement report and transmitting the data to the wireless quality analysis server (200, 400); **characterized in that**
in the step (c), the base station controller (11, 81) transmits a plurality of the wireless quality measurement requests, each such request being for collection of a different type of data for wireless quality measurement, and
**in that** in the step (d), the base station controller (11, 81) receives a single wireless quality measurement report including all types of data for wireless quality measurement in response to the plurality of the wireless quality measurement requests.

2. The method for measuring a wireless quality of a wireless network according to claim 1, further comprising:
before the step (b), in the case that the subscriber terminal is in an idle state, the mobile switching center (12, 82) changing a state of the subscriber terminal into an active state.

3. The method for measuring a wireless quality of a wireless network according to claim 1,
wherein the base station controller (11, 81) periodically receives the wireless quality measurement report from the subscriber terminal.

4. The method for measuring a wireless quality of a wireless network according to claim 1 or 2,
wherein, in the step (e), the base station controller (11, 81) integrates the data for wireless quality measurement and round trip time, RTT, obtained from a base station (10, 80), and transmits to the wireless quality analysis server (200, 400).

5. The method for measuring a wireless quality of a wireless network according to claim 1,
wherein the data for wireless quality measurement includes common pilot channel received signal code power, CPICH RSCP, common pilot channel signal strength, CPICH Ec/lo, BLER, Block Error Rate, user equipment transmitted power, Tx Power and user equipment receiving-transmitting time difference, Rx-Tx Time Difference.

6. A system for measuring a wireless quality of a wireless network in a mobile communication system, the system comprising:
a mobile switching center (12, 82) for executing location report control about a subscriber terminal based on a location service;
a base station controller (11, 81) for receiving a location report order about a specific subscriber terminal from the mobile switching center (12, 82), transmitting a wireless quality measurement request to the specific subscriber terminal, and receiving a response to the request; and
a wireless quality analysis server (200, 400) for receiving data extracted from the response for wireless quality measurement from the base station controller (11, 81), and analyzing a wireless quality of a wireless network based on the data; **characterized in that**
in the case that the subscriber terminal to execute location report control is in an idle state, the mobile switching center (12, 82) temporarily activates the subscriber terminal to execute location report control;
**in that** the wireless quality analysis server (200, 400) sets a collection range of data for wireless quality measurement, and transmits related information to the base station controller (11, 81);
**in that** the base station controller (11, 81) receives a wireless quality measurement response from the subscriber terminal having call setup in the collection range; and
**in that** the base station controller (11, 81) transmits a plurality of the wireless quality measurement requests to the subscriber terminal, each such request being for collection of a different type of data for wireless quality measurement, and receives a single wireless quality measurement response including all types of data for wireless quality measurement in response to the plurality of the wireless quality measurement requests.

## Patentansprüche

1. Verfahren zum Messen einer Drahtlos-Qualität eines drahtlosen Netzwerks unter Verwendung eines Lokalisierungsdienstes in einem mobilen Kommunikationssystem, das aus einem Drahtlos-Qualitäts-Analyse-Server (200, 400) zum Analysieren der Drahtlos-Qualität, einem Mobil-Umschaltzentrum (12, 82) und einem Basisstation-Controller (11, 81) besteht, wobei das Verfahren aufweist:
(a) der Drahtlos-Qualitäts-Analyse-Server (200, 400) fragt einen Lokalisierungsdienst in Bezug auf ein spezifisches Subscriber-Terminal zu dem Mobil-Umschaltzentrum (12, 82) an;
(b) das Mobil-Umschaltzentrum (12, 82) übermittelt eine Lokalisierungsberichtsanfrage des Subscriber-Terminals an den Basisstation-Controller (11, 81);
(c) der Basisstation-Controller (11, 81) übermittelt eine Drahtlos-Qualitäts-Messanfrage an das Subscriber-Terminal auf Basis der Lokalisierungsberichtsanfrage;
(d) der Basisstation-Controller (11, 81) empfängt einen Drahtlos-Qualitäts-Messbericht von dem Subscriber-Terminal; und
(e) der Basisstation-Controller (11, 81) extrahiert von dem Drahtlos-Qualitäts-Messbericht Daten für eine Drahtlos-Qualitätsmessung und übermittelt die Daten an den Drahtlos-Qualitäts-Analyse-Server (200, 400);
**dadurch gekennzeichnet, dass**
im Schritt (c) der Basisstation-Controller (11, 81) eine Vielzahl von Drahtlos-Qualitäts-Messanfragen übermittelt, wobei jede Anfrage für eine Ansammlung eines unterschiedlichen Typs von Daten für eine Drahtlos-Qualitätsmessung steht, und
dass im Schritt (d) der Basisstation-Controller (11, 81) einen einzigen Drahtlos-Qualitätsmessbericht empfängt, der alle Typen von Daten für eine Drahtlos-Qualitätsmessung in Antwort.auf die Vielzahl der Drahtlos-Qualitätsmessanfragen träge umfasst.

2. Verfahren zur Messung einer Drahtlos-Qualität eines drahtlosen Netzwerkes nach Anspruch 1, weiter aufweisend:
vor Schritt (b), wenn sich das Subscriber-Terminal in einem Ruhezustand befindet, wechselt das Mobil-Umschaltzentrum (12, 82) den Zustand des Subscriber-Terminals in einen aktiven Zustand.

3. Verfahren zum Messen einer Drahtlos-Qualität eines drahtlosen Netzwerkes nach Anspruch 1,
bei welchem der Basisstation-Controller (11, 81) von dem Subscriber-Terminal den Drahtlos-Qualitätsmessbericht periodisch empfängt.

4. Verfahren zum Messen einer Drahtlos-Qualität eines drahtlosen Netzwerkes nach Anspruch 1 oder 2,
bei welchem im Schritt (e) der Basisstation-Controller (11, 81) die Daten für eine Drahtlos-Qualitätsmessung und eine Roundtrip-Zeit (RTT), die von einer Basisstation (10, 80) erhalten wird, integriert und an den Drahtlos-Qualitäts-Analyse-Server (200, 400) übermittelt.

5. Verfahren zum Messen einer Drahtlos-Qualität eines drahtlosen Netzwerkes nach Anspruch 1,
bei welchem die Daten für eine Drahtlos-Qualitätsmessung Common-Pilot-Channel-Received-Signal-Code-Power, CPICH RSCP, Common-Pilot-Channel-Signal-Strength, CPICH Ec/Io, BLER, Block Error Rate, User-Equipment-Transmitted-Power, Tx Power, und User-Equipment-Receiving-Transmitting-Time-Difference, Rx-Tx Time Difference, umfassen.

6. System zum Messen einer Drahtlos-Qualität eines drahtlosen Netzwerks in einem mobilen Kommunikationssystem, wobei das System aufweist:
ein Mobil-Umschaltzentrum (12, 82) zum Ausführen einer Lokalisierungsberichts-Steuerung in Bezug auf ein Subscriber-Terminal auf Basis eines Lokalisierungsdienstes;
einen Basisstation-Controller (11, 81) zum Empfangen eines Lokalisierungsberichts-Auftrags in Bezug auf ein spezifisches Subscriber-Terminal von dem Mobil-Umschaltzentrum (12, 82), zum Übermitteln einer Drahtlos-Qualitäts-Messanfrage an das spezifische Subscriber-Terminal, und zum Empfangen einer Antwort auf die Anfrage; und
einen Drahtlos-Qualitäts-Analyse-Server (200, 400) zum Empfangen von Daten, die von der Antwort für die Drahtlos-Qualitätsmessung von dem Basisstation-Controller (11, 81) extrahiert wurden, und zum Analysieren einer Drahtlos-Qualität eines drahtlosen Netzwerks auf Basis der Daten;
**dadurch gekennzeichnet, dass**
für den Fall, dass sich das Subscriber-Terminal zum Ausführen der Lokalisierungsberichts-Steuerung in einem Ruhezustand befindet, das Mobil-Umschaltzentrum (12, 82) kurzfristig das Subscriber-Terminal aktiviert, um die Lokalisierungsberichts-Steuerung auszuführen;
dass der Drahtlos-Qualitäts-Analyse-Server (200, 400) einen Ansammlungsbereich für die Daten für eine Drahtlos-Qualitätsmessung festlegt, und diesbezügliche Informationen an den Basisstation-Controller (11, 81) übermittelt;
dass der Basisstation-Controller (11, 81) eine Drahtlos-Qualitäts-Messantwort von dem Subscriber-Terminal empfängt, die einen Call-Setup in dem Ansammlungsbereich besitzt; und
dass der Basisstation-Controller (11, 81) eine Vielzahl an Drahtlos-Qualitäts-Messanfragen an das Subscriber-Terminal übermittelt, wobei jede Anfrage eine Ansammlung eines unterschiedlichen Typs von Daten für die Drahtlos-Qualitätsmessung betrifft, und eine einzige Drahtlos-Qualitäts-Messantwort, die alle Typen an Daten für eine Drahtlos-Qualitätsmessung in Antwort auf die Vielzahl der Drahtlos-Qualitäts-Messanfragen umfasst, empfängt.

## Revendications

1. Procédé pour mesurer une qualité sans fil d'un réseau sans fil en utilisant un service de localisation dans un système de communication mobile composé d'un serveur d'analyse de qualité sans fil (200, 400) pour analyser la qualité sans fil, d'un centre de commutation de mobile (12, 82) et d'un contrôleur de station de base (11, 81), le procédé comprenant les étapes suivantes :
(a) le serveur d'analyse de qualité sans fil (200, 400) demande au centre de commutation de mobile (12, 82) un service de localisation concernant un terminal d'abonné spécifique ;
(b) le centre de commutation de mobile (12, 82) transmet une requête de rapport de localisation du terminal d'abonné au contrôleur de la station de base (11, 81) ;
(c) le contrôleur de station de base (11, 81) transmet une requête de mesure de qualité sans fil au terminal d'abonné sur la base de la requête de rapport de localisation ;
(d) le contrôleur de station de base (11, 81) reçoit un rapport de mesure de qualité sans fil du terminal d'abonné ; et
(e) le contrôleur de station de base (11, 81) extrait des données de mesure de qualité sans fil à partir du rapport de mesure de qualité sans fil et transmet les données au serveur d'analyse de qualité sans fil (200, 400) ; **caractérisé en ce que**
à l'étape (c), le contrôleur de station de base (11, 81) transmet une pluralité de requêtes de mesure de qualité sans fil, chacune de ces requêtes étant destinée à la collecte d'un type différent de données pour la mesure de qualité sans fil, et
**en ce qu'**à l'étape (d), le contrôleur de station de base (11, 81) reçoit un unique rapport de mesure de qualité sans fil incluant tous les types de données de mesure de qualité sans fil en réponse à la pluralité de requêtes de mesure de qualité sans fil.

2. Procédé pour mesurer une qualité sans fil d'un réseau sans fil selon la revendication 1, comprenant en outre l'étape suivante :
avant l'étape (b), dans le cas où le terminal d'abonné est à l'état inactif, le centre de commutation de mobile (12, 82) change l'état du terminal d'abonné à l'état actif.

3. Procédé pour mesurer une qualité sans fil d'un réseau sans fil selon la revendication 1,
dans lequel le contrôleur de la station de base (11, 81) reçoit périodiquement le rapport de mesure de qualité sans fil depuis le terminal d'abonné.

4. Procédé pour mesurer une qualité sans fil d'un réseau sans fil selon la revendication 1 ou 2,
dans lequel, à l'étape (e), le contrôleur de station de base (11, 81) intègre les données de mesure de qualité sans fil et de temps de trajet aller-retour, RTT (round trip time) obtenues d'une station de base (10, 80) et transmet au serveur d'analyse de qualité sans fil (200, 400).

5. Procédé pour mesurer une qualité sans fil d'un réseau sans fil selon la revendication 1 ou 2,
dans lequel les données de mesure de qualité sans fil incluent la puissance de code du signal reçu de canal pilote commun, CPICH RSCP (common pilot channel received signal code power), la force du signal de canal pilote commun, CPICH Ec/Io, le taux d'erreur de bloc, BLER, la puissance transmise par l'équipement utilisateur, Tx Power et la différence de temps réception/transmission de l'équipement utilisateur, Différence de Temps Rx-Tx.

6. Système pour mesurer une qualité sans fil d'un réseau sans fil dans un système de communication mobile, le système comprenant :
un centre de commutation de mobile (12, 82) pour exécuter un contrôle de rapport de localisation concernant un terminal d'abonné sur la base d'un service de localisation ;
un contrôleur de station de base (11, 81) pour recevoir un ordre de rapport de localisation concernant un terminal d'abonné spécifique depuis le centre de commutation de mobile (12, 82), transmettre une requête de mesure de qualité sans fil au terminal d'abonné spécifique, et recevant une réponse à la requête ; et
un serveur d'analyse de qualité sans fil (200, 400) pour recevoir les données extraites de la réponse pour la mesure de qualité sans fil venant du contrôleur de station de base (11, 81) et analyser une qualité sans fil d'un réseau sans fil sur la base des données ; **caractérisé en ce que**
dans le cas où le terminal d'abonné devant exécuter le contrôle de rapport de localisation est à l'état inactif, le centre de commutation de mobile (12, 82) active temporairement le terminal d'abonné pour exécuter le contrôle de rapport de localisation ;
**en ce que** le serveur d'analyse de qualité sans fil (200, 400) définit une plage de collecte de données pour la mesure de qualité sans fil et transmet les informations liées au contrôleur de station de base (11, 81) ;
**en ce que** le contrôleur de station de base (11, 81) reçoit une réponse de mesure de la qualité sans fil du terminal d'abonné ayant une configuration d'appel dans la plage de collecte ; et
**en ce que** le contrôleur de station de base (11 , 81) transmet une pluralité des requêtes de mesure de qualité sans fil au terminal d'abonné, chacune de ces requêtes étant prévue pour la collecte d'un type différent de données pour une mesure de la qualité sans fil, et reçoit une réponse de mesure de la qualité sans fil unique incluant tous les types de données de mesure de qualité sans fil en réponse à la pluralité de requêtes de mesure de qualité sans fil.
